# EUROPEAN PATENT SPECIFICATION

(11) **EP 4 009 054 B1**
(45) Date of publication and mention of the grant of the patent: **18.06.2025**
(21) Application number: 20850523.0
(22) Date of filing: 21.02.2020
(51) Int. Cl.: G01N 35/10, G01F 11/12, G01F 13/00, G01F 15/063, F04B 43/00, F04B 43/12, F04B 51/00

(54) **AUTOMATIC ANALYSIS DEVICE**
AUTOMATISCHE ANALYSEVORRICHTUNG
DISPOSITIF D'ANALYSE AUTOMATIQUE

(30) Priority: 02.08.2019 JP 2019142982
(43) Date of publication of application: 08.06.2022
(73) Proprietor: Hitachi High-Tech Corporation, Minato-ku Tokyo 105-6409 (JP)
(72) Inventor: HOSONO, Shunsuke, Tokyo 105-6409 (JP); TAKADA, Eiichiro, Tokyo 105-6409 (JP); HAMASAKI, Koshin, Tokyo 105-6409 (JP)
(74) Representative: Strehl & Partner mbB
(86) International application number: PCT/JP2020/007160
(87) International publication number: WO 2021/024522

(56) References cited:
- GB-A- 1 359 161
- GB-A- 1 544 568
- JP-A- 2002 350 453
- JP-A- 2003 088 580
- JP-A- 2008 051 620
- JP-A- 2009 270 453
- JP-A- 2013 188 928
- JP-A- S6 226 070
- US-A1- 2017 205 270

## Description

### [Technical Field]

The present invention relates to an automatic analyzer.

### [Background Art]

An automatic analyzer adds reagent to a reaction container to which a biological body sample such as blood and urine is dispensed, and allows the biological body sample and the reagent to react with each other. Also, the automatic analyzer performs qualitative and quantitative analysis of the biological body sample by performing measurement of the light absorbance and the light emission amount of a reaction liquid.

The automatic analyzer requires a pump supplying a predetermined amount of liquid at predetermined timing from a container to another container. For example, such example can be cited with respect to reagent used for measurement that the reagent in an amount consumed in the previous cycle is supplied for each measurement cycle from a bottle to an analyzing unit. At this time, there is a case of using a simple and inexpensive tube pump. The tube pump is a pump delivering liquid inside a tube by squashing the tube by a roller and moving the roller to squeeze the tube. After the roller moves, although the squashed tube returns to an original shape by a restoring force, a negative pressure is generated inside the tube at that time. Thus, the liquid is aspired. By performing such motion continuously, the liquid is supplied in sequence.

As described above, since liquid is supplied while the tube is squashed by the roller, degradation of the tube affects the life of the pump. When the deterioration of the tube proceeds, the liquid supply amount gradually drops, and it is also probable that the tube bursts and the liquid leaks. Therefore, a function of performing feedback control of the liquid supply amount and a function of performing determination of the maintenance timing of the pump by measuring the degradation state of the tube become important.

Here, in Patent Literatures 1 and 2, there are disclosed technologies for properly determining the replacement timing of a consumable component (tube) of a tube pump and reducing a cost and effort incurred for the maintenance.

According to Patent Literature 1, a function of detecting the liquid amount of the liquid supplied to the container is provided, a time for supplying to a defined liquid amount is measured, and variation of the liquid supply amount namely degradation state of the tube is determined from variation of the liquid amount supply time. At the time the liquid supply amount exceeds a set threshold, an event that the maintenance timing has come is notified. According to Patent Literature **2,** based on the measured supply time of the calibration sample, the supply operation is feedback-controlled in order that the supply time falls into a normal supply time range that is set beforehand.

### [Citation List]

### [Patent Literature]

Patent Literature 1:
   Japanese Unexamined Patent Application Publication No. 2009-270453
Patent Literature 2:
   Japanese Unexamined Patent Application Publication No. 2008-051620

JP 2002 350453 A discloses an automatic analyzer with the features in the preamble of present claim 1. Another conventional analyzer is described in US 10 094 695 A.

### [Summary of Invention]

### [Technical Problem]

However, according to the prior arts, it was necessary to measure the supply time until the liquid was supplied to the container and was detected, detailed positional adjustment between the container and the detection unit was required, and therefore it could not be said that the effort incurred for the maintenance could be reduced sufficiently.

Therefore, the object of the present invention is to provide an automatic analyzer capable of easily determining the degradation state of a tube pump.

### [Solution to Problem]

The object is met by the automatic analyzer defined in claim 1. The dependent claims relate to preferred embodiments.

### [Advantageous Effects of Invention]

An effect obtained by a representative one out of the inventions disclosed in the present application will be briefly explained below.

That is to say, according to a representative embodiment of the present invention, it is allowed to easily determine the degradation state of a tube pump.

### [Brief Description of Drawings]

FIG. 1 is a diagram showing an exemplary schematic configuration of an automatic analyzer;
FIG. 2 is a diagram showing exemplary configurations of an analyzing unit and components around the analyzing unit;
FIG. 3 is a diagram showing an exemplary configuration of a controller involved in a determination process for maintenance options; and
FIG. 4 is a flowchart showing an exemplary determination process for maintenance options.

### [Description of Embodiments]

An embodiment of the present invention will be explained below referring to the drawings. The embodiment explained below is an example for achieving the present invention, and does not limit the technical range of the present invention. Also, in the embodiment, members having a same function will be marked with a same reference sign, and repeated explanation thereof will be omitted excluding a case of being especially necessary.

### <Configuration of automatic analyzer>

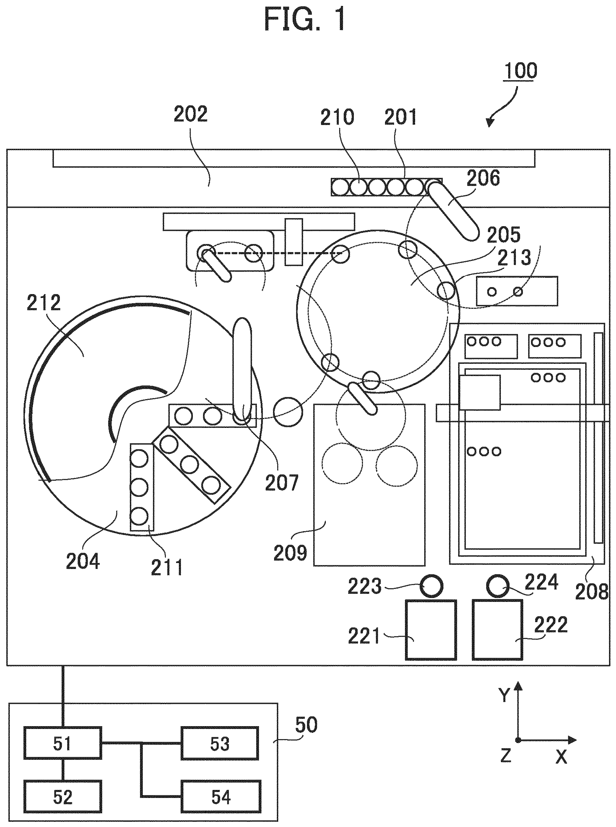

FIG. 1 is a diagram showing an exemplary schematic configuration of an automatic analyzer. An automatic analyzer 100 includes a rack transport line 202 transporting a rack 201 accommodating plural number of sample containers 210 that accommodate a biological body sample such as blood and urine, a reagent holding unit (reagent disk) 204 holding a reagent container accommodating a reagent while cooling it, an incubator (reaction disk) 205, a sample dispensing unit 206, a reagent dispensing unit 207, a transport unit 208 transporting a consumable component, an analyzing unit 209, a first liquid bottle 221, a cleaning fluid bottle 222, a first liquid delivery pump (tube pump) 223, a cleaning fluid delivery pump (tube pump) 224, and a controller 50 configured to controlling an operation of the entire automatic analyzer 100.

At least a part of the upper surface of the reagent holding unit 204 is covered by a reagent disk cover 212. The incubator 205 includes a reaction container holding portion to which plural number of reaction containers 213 for allowing a sample and a reagent to react with each other are held, and a temperature adjusting mechanism (illustration is omitted) adjusting the temperature of the reaction container 213 to a desired temperature. The reaction container holding portion is plural number of holes arranged on the disk in order to hold the reaction containers 213. The sample dispensing unit 206 dispenses a sample from the sample container 210 to the reaction container 213 by a drive mechanism such as a rotational drive mechanism and a vertical drive mechanism, the reaction container 213 being accommodated in the incubator 205. In a similar manner, the reagent dispensing unit 207 dispenses a reagent from the reagent container 211 to the reaction container 213 by a drive mechanism such as a rotational drive mechanism and a vertical drive mechanism, the reaction container 213 being accommodated in the incubator 205. The analyzing unit 209 includes a photoelectron multiplier tube, a light source lamp, a spectrometer, a photodiode, and the like (illustration of all of them is omitted) for example, has a function of adjusting the temperature of them, and performs analysis of the reaction liquid.

The controller 50 includes a control unit 51, a storage unit 52, an operation unit 53, and a display unit 54. The controller 50 controls respective processes related to the automatic analyzer 100 such as a process related to dispensing of a sample and a reagent and so on, a process of temperature management in the incubator 205 and so on, a process related to the analyzing unit 209, and a process related to maintenance of the first liquid delivery pump and the cleaning fluid delivery pump 224. The controller 50 is configured of a processor and the like, performs a control program read out from the storage unit 52, and thereby performs these processes. The storage unit 52 includes a non-volatile memory, and stores an operation program and setting information of the automatic analyzer 100, a computation result by the control unit 51, and so on. Further, the storage unit 52 also stores a determination condition related to maintenance of the first liquid delivery pump 223 and the cleaning fluid delivery pump 224, and so on.

Also, X-direction and Y-direction shown in FIG. 1 are orthogonal directions configuring a horizontal plane, X-direction is to be the lateral direction of the apparatus, and Y-direction is to be the depth direction of the apparatus. Z-direction is the vertical direction and is the height direction of the apparatus.

The analyzing unit 209 is a detection mechanism for an immunological inspection, and performs optical measurement for the reaction liquid at the time of the immunological inspection. The transport unit 208 moves the reaction container 213 to the analyzing unit 209, the reaction liquid reacted for a predetermined time on the incubator 205 being accommodated in the reaction container 213. The analyzing unit 209 performs optical measurement for the reaction liquid of the reaction container 213. As a method for detecting a labeled substance in the immunological inspection, there is one using electrochemical luminescence and chemical luminescence for example. According to each method, the first liquid, the labeled substance, the structure and the property of the detection region are selected. The analyzing unit 209 measures a light emission amount derived from a light emission reaction of the labeled substance using a photoelectron multiplier tube as a detector.

The first liquid bottle 221 is a container holding the first liquid related to the analysis. The cleaning fluid bottle 222 is a container holding a cleaning fluid. The first liquid delivery pump 223 is a pump supplying the first liquid in the first liquid bottle 221 to the analyzing unit 209. The cleaning fluid delivery pump 224 is a pump supplying the cleaning fluid in the cleaning fluid bottle 222 to the analyzing unit 209. In the analyzing unit 209, a predetermined amount of the first liquid and the cleaning fluid is used for every measurement cycle. Therefore, the first liquid and the cleaning fluid in an amount consumed in the previous cycle are replenished respectively to the analyzing unit 209 by the first liquid delivery pump 223 and the cleaning fluid delivery pump 224.

Also, with respect to the dispensing pump not illustrated, high dispensing accuracy is required. On the other hand, with respect to the first liquid delivery pump 223 and the cleaning fluid delivery pump 224 for replenishing the liquid, such high accuracy as that of the dispensing pump is not required. Therefore, with respect to the first liquid delivery pump 223 and the cleaning fluid delivery pump 224, a tube pump is used which is inexpensive and easy in maintenance.

The tube pump is a pump delivering liquid inside a tube by squashing the tube by a roller and moving the roller to squeeze the tube. After the roller moves, although the squashed tube returns to an original shape by a restoring force, a negative pressure is generated inside the tube at that time and the liquid is aspired. By performing such motion continuously, the liquid is delivered in sequence.

### <<Configuration of detection mechanism and its surroundings>>

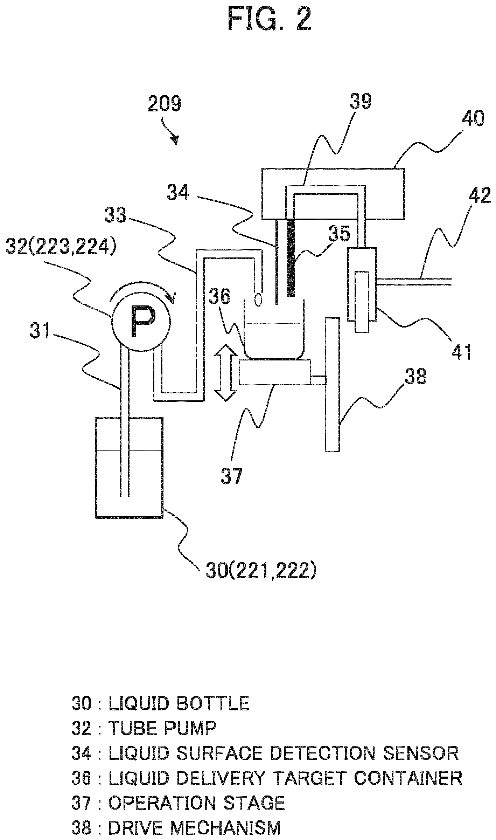

FIG. 2 is a diagram showing exemplary configurations of an analyzing unit and components around the analyzing unit. In FIG. 2, a hardware configuration for determining a degradation state of the tube pump is mainly shown. Further, although explanation will be given exemplifying a route for supplying the first liquid from the first liquid bottle 221 to the analyzing unit 209 by the first liquid delivery pump 223, a case of supplying the cleaning fluid by the cleaning fluid delivery pump 224 is also applicable in a similar manner.

As shown in FIG. 2, the analyzing unit 209 includes a liquid surface detection sensor (will be hereinafter referred to as a sensor) 34, an aspiration nozzle 35, a liquid delivery target container 36, an operation stage (mounting unit) 37, a drive mechanism 38, a detection processing unit 40, and the like. The first liquid delivered from the first liquid bottle 221 by the first liquid delivery pump 223 is supplied to the liquid delivery target container 36 through a first flow passage 31 and a second flow passage 33.

The liquid delivery target container 36 to which the first liquid or the cleaning fluid is supplied is mounted on the operation stage 37. The drive mechanism 38 moves the operation stage 37 and the liquid delivery target container 36 in the vertical direction by a vertical drive mechanism.

The sensor 34 is a sensor performing detection of the liquid surface of the first liquid and the cleaning fluid supplied to the liquid delivery target container 36. The sensor 34 is formed into a bar shape for example, and is arranged to extend in the vertical direction above the liquid delivery target container 36. One end portion of the sensor 34 is connected to the detection processing unit 40, and the sensor 34 is fixed in a state of being hung from the detection processing unit 40. When the liquid delivery target container 36 is moved in the vertical direction along with the operation stage 37 and the liquid surface of the liquid delivery target container 36 touches the other end portion on the lower side of the sensor 34, the liquid surface is detected. The sensor 34 outputs a liquid surface detection signal when the liquid surface is detected.

The aspiration nozzle 35 is a nozzle aspiring and removing the liquid (the first liquid and the cleaning fluid) remaining in the liquid delivery target container 36. The aspiration nozzle 35 is connected to a pump 41 through a third flow passage 39. When the pump 41 is driven, the aspiration nozzle 35 aspires the liquid inside the liquid delivery target container 36. The liquid aspired by the aspiration nozzle 35 is delivered to the outside of the analyzing unit 209 through the third flow passage 39 and a fourth flow passage 42, and is discharged to a waste liquid bottle and the like not illustrated.

The detection processing unit 40 is a unit performing optical measurement related to the immunological inspection mainly in the analyzing unit 209, and includes a basic circuit related to the liquid surface detection. In this case, the controller 50 controls the liquid surface detection process. The detection processing unit 40 is connected to the controller 50, and transmits the liquid surface detection result related to the liquid surface detection process to the controller 50. Alternatively, the detection processing unit 40 may be a functional block performing a process related to the liquid surface detection inside the liquid delivery target container 36. In this case, the detection processing unit 40 includes a processor, a memory, and the like for example. The processor performs a program stored in the memory, and a process related to the liquid surface detection is thereby performed.

In the explanation below, there is a case that the first liquid bottle 221 and the cleaning fluid bottle 222 are referred to as a liquid bottle 30. Also, there is a case that the first liquid delivery pump 223 and the cleaning fluid delivery pump 224 are referred to as a tube pump 32.

### <Determination process for maintenance options>

With respect to the tube pump, since the tube is squashed by the roller, the tube goes to degrade as the tube pump is used. With respect to the tube pump having been used for a long time, the liquid delivery amount gradually reduces by drop of the restoring force of the tube and so on. When the degradation proceeds further, the tube bursts, a function as a pump cannot be exerted, and the liquid leaks. Therefore, it is required to regularly replace the tube of the tube pump.

Therefore, according to the present embodiment, determination for maintenance options based on a degradation state of the tube is performed. The determination process for maintenance options is performed before start and after completion of an analysis operation of one day. Also, the determination process for maintenance options is performed is performed every day, or once or several times in a week.

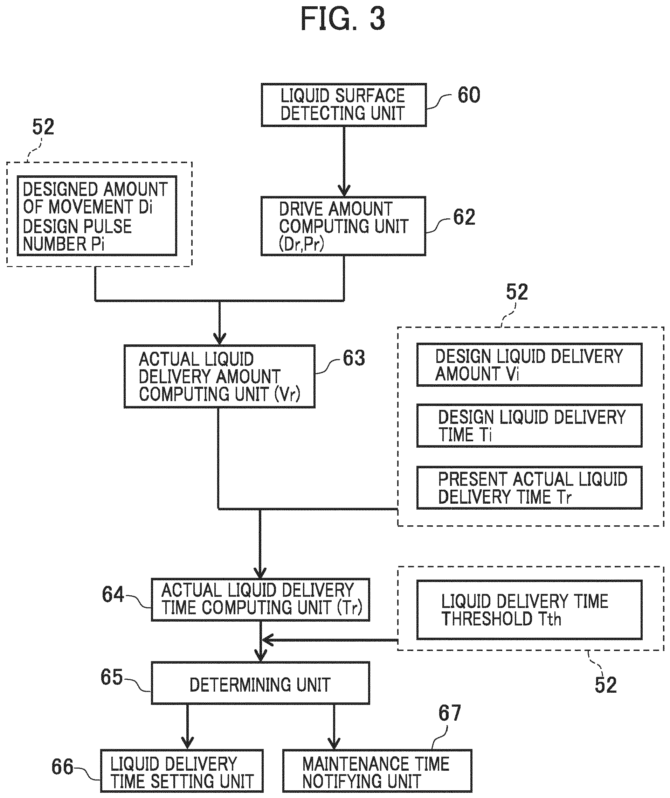

FIG. 3 is a diagram showing an exemplary configuration of a controller involved in a determination process for maintenance options. The control unit 51 includes a liquid surface detection unit 60, a moving amount computation unit 62 for vertical drive of the drive mechanism 38, an actual liquid delivery amount computation unit 63, an actual liquid delivery time computation unit 64, a determination unit 65 for maintenance options, a liquid delivery time setting unit 66, a maintenance timing notification unit 67, and the like. Also, a part of the functional block such as the liquid surface detection unit 60 may be arranged within the detection processing unit 40.

The liquid surface detection unit 60 is a functional block performing liquid surface detection of the liquid delivery target container 36 in cooperation with the sensor 34. The moving amount computation unit 62 is a functional block computing a moving amount of vertical driving of the drive mechanism 38. The moving amount computation unit 62 computes a moving amount of the operation stage 37 based on a pulse number imparted to the drive mechanism 38 for example.

The actual liquid delivery amount computation unit 63 is a functional block computing a liquid amount of the liquid delivered by the tube pump 32. The actual liquid delivery time computation unit 64 is a functional block computing an actual liquid delivery time required for delivering a liquid in an amount of a design liquid delivery amount Vi. The design liquid delivery amount Vi is an actual liquid delivery amount before the tube of the tube pump is degraded.

The determination unit 65 is a functional block performing determination for maintenance options based on a degradation state of the tube. The liquid delivery time setting unit 66 is a functional block setting an actual liquid delivery time computed by the actual liquid delivery time computation unit 64 as a time for driving the pump. The maintenance timing notification unit 67 is a functional block notifying a user of maintenance timing based on the determination result by the determination unit 65.

As shown in FIG. 3, the storage unit 52 stores a designed amount of movement Di of the operation stage 37, a design pulse number Pi, a design liquid delivery amount Vi (ml), a design liquid delivery time Ti (sec), an actual liquid delivery time Tr (sec), a liquid delivery time threshold Tth (sec), and the like. These are values used in a determination process for maintenance options. The designed amount of movement Di is a value showing a moving amount of the operation stage 37 (the liquid delivery target container 36) when a liquid of the design liquid delivery amount Vi is delivered. The designed amount of movement Di is set according to a use amount of each liquid of each measurement cycle. Also, the design pulse number Pi is a value corresponding to the designed amount of movement Di, and is a pulse number of a motor required for raising the operation stage 37 by an amount of the designed amount of movement Di. In other words, the design pulse number Pi is a pulse number when a liquid in an amount of a design liquid delivery amount Vi described below is supplied.

The design liquid delivery amount Vi is a value showing a liquid delivery amount of a liquid (the first liquid, the cleaning fluid) that should be delivered using the tube pump at each measurement cycle. In other words, the design liquid delivery amount Vi is a value showing a use amount of a liquid of each measurement cycle.

The design liquid delivery time Ti is a value showing a time required for delivering a liquid in an amount of a design liquid delivery amount before the tube is degraded. The actual liquid delivery time Tr is a value showing a time actually required for delivering a liquid in an amount of a design liquid delivery amount, and is a value computed in a determination process for maintenance options of the previous time. Also, an actual liquid delivery time in a determination process for maintenance options of the present time explained below is also expressed Tr. The liquid delivery time threshold Tth (sec) is a value used in determination of maintenance options with respect to the tube pump 32 using the actual liquid delivery time Tr.

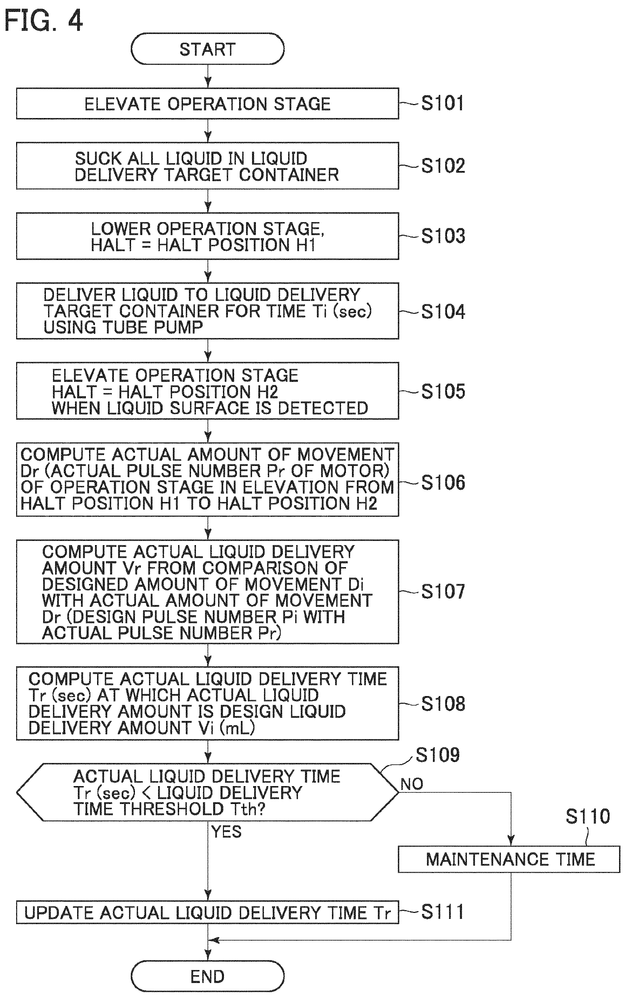

FIG. 4 is a flowchart showing an exemplary determination process for maintenance options. In FIG. 4, a determination process for maintenance options is performed by steps S101 to S111. Also, the determination process for maintenance options is performed for each of the first liquid delivery pump 223 and the cleaning fluid delivery pump 224.

In the determination process for maintenance options, first, a liquid remaining in the liquid delivery target container 36 should be removed. The control unit 51 drives the drive mechanism 38 to raise the operation stage 37. Also, when the bottom surface of the liquid delivery target container 36 reaches the vicinity of the aspiration nozzle 35, the control unit 51 stops the operation stage 37 (step S101).

Next, the control unit 51 drives the pump 41 to aspire a liquid remaining in the liquid delivery target container 36 from the aspiration nozzle 35. The liquid having been aspired is discharged to a waste liquid tank and the like through the third flow passage 39 and the fourth flow passage 42 (step S102).

After the liquid remaining in the liquid delivery target container 36 is discharged, the control unit 51 lowers the operation stage 37 and stops it at a predetermined position by the drive mechanism 38 (step S103). The stop position this time (the first position) is made H1. The process up to here is the preparatory work before liquid delivery by the tube pump 32.

In step S104, the control unit 51 drives the tube pump 32 to supply the liquid in the liquid bottle 30 to the liquid delivery target container 36 through the first flow passage 31 and the second flow passage 33. In concrete terms, the control unit 51 refers to the design liquid delivery time Ti stored in storage unit 52, and delivers the liquid by the design liquid delivery time Ti (sec). Also, when the tube has not been degraded, the liquid in an amount of the design liquid delivery amount Vi (ml) comes to be delivered to the liquid delivery target container 36 in the design liquid delivery time Ti (sec).

Next, the control unit 51 raises the operation stage 37 from the position H1 (step S105). When the sensor 34 detects the liquid surface inside the liquid delivery target container 36 and the liquid surface detection signal is inputted to the liquid surface detection unit 60, the control unit 51 stops the operation stage 37. The stop position this time (the second position) is made H2.

In step S106, the moving amount of the operation stage 37 is computed. From the stop position H1 before raising and the stop position H2 after raising, the moving amount computation unit 62 computes an actual amount of movement Dr (=H2-H1) of the operation stage 37. The moving amount computation unit 62 may compute the actual amount of movement Dr as the moving amount, and may compute an actual pulse number Pr of the motor required for raising the operation stage 37. The moving amount computation unit 62 stores the actual amount of movement Dr and the actual pulse number Pr having been computed in the storage unit 52.

In step S107, based on the actual amount of movement Dr or the actual pulse number Pr having been computed by the moving amount computation unit 62, an actual liquid delivery amount Vr of a liquid supplied to the liquid delivery target container 36 is computed. In concrete terms, for example, the actual liquid delivery amount computation unit 63 compares the designed amount of movement Di having been stored in the storage unit 52 and the actual amount of movement Dr having been computed by the moving amount computation unit 62, and computes the actual liquid delivery amount Vr. Alternatively, for example, the actual liquid delivery amount computation unit 63 compares the design pulse number Pi stored in the storage unit 52 and the actual pulse number Pr having been computed by the moving amount computation unit 62, and computes the actual liquid delivery amount Vr.

In step S108, the actual liquid delivery time Tr required for delivering a liquid in an amount of the design liquid delivery amount Vi is computed. The actual liquid delivery time computation unit 64 computes the difference of the design pulse number Pi and the actual pulse number Pr for example, and an extension time ΔT of the liquid delivery time is computed from the difference of the pulse number. Also, by adding the extension time ΔT to the design liquid delivery time Ti, the actual liquid delivery time computation unit 64 computes the actual liquid delivery time Tr (=Ti+ΔT).

In step S109, determination for maintenance options is performed. The determination unit 65 performs the determination by whether or not the actual liquid delivery time Tr computed by the actual liquid delivery time computation unit 64 is smaller than the liquid delivery time threshold Tth stored in the storage unit 52 (Tr<Tth). When the actual liquid delivery time Tr is equal to or larger than the liquid delivery time threshold Tth (Tr≥Tth) (No), the determination unit 65 determines that the tube has been deteriorated to the limit and maintenance for the tube pump 32 is required. In this case, the maintenance timing notification unit 67 notifies the outside of the fact that the replacement timing of the tube has come by a means of displaying on a screen, the voice, and the like (step S110), and the determination process for maintenance options is finished.

On the other hand, when the actual liquid delivery time Tr is smaller than the liquid delivery time threshold Tth (Yes) in step S109, the determination unit 65 determines that the tube is not deteriorated to the limit and maintenance for the tube pump 32 is not required.

In this case, the liquid delivery time setting unit 66 updates the actual liquid delivery time Tr stored in the storage unit 52 to the actual liquid delivery time computed by the actual liquid delivery time computation unit 64 (step S111). Also, the determination process for maintenance options is finished.

In the time chart of the analysis operation such as an immunological inspection, the actual liquid delivery time Tr having been updated is set as the liquid delivery time. Therefore, the time chart of the immunological inspection is designed considering an extension time so that the liquid delivery time of the liquid can be extended. The limit of time beyond which the liquid delivery time cannot extend is the liquid delivery time threshold Tth.

### <Main effect by the present embodiment>

According to the present embodiment, the control unit 51 computes the actual liquid delivery amount Vr of the liquid in the design liquid delivery time Ti based on the stop position H1 before raising of the operation stage 37 and the stop position H2 at the time of detection of the liquid surface after raising, and determines the deterioration state of the tube pump 32 based on the design liquid delivery amount Vi and the actual liquid delivery amount Vr.

In the past, when the deterioration state of the tube was to be determined, variation of the flow rate (the liquid delivery time per unit time) was confirmed by measuring the supply time after starting of delivery of the liquid to the container becoming the liquid delivery target until detection of the liquid surface. According to this method, positional adjustment between the container becoming the liquid delivery target and the liquid surface detection unit had to be performed strictly, and difficult work was involved in determination of the deterioration state of the tube pump.

On the other hand, according to the present embodiment, since the stop positions H1 and H2 of the operation stage 37 before and after raising only have to be measured, the deterioration state of the tube pump can be determined easily.

Also, according to the present embodiment, the control unit 51 computes the actual amount of movement Dr of the operation stage 37 based on the stop position H1 and the stop position H2, and computes the actual liquid delivery amount Vr based on the actual amount of movement Dr and the designed amount of movement Di before the tube pump 32 is deteriorated. In concrete terms, the control unit 51 computes the actual moving amount Vr based on the rotational speed of the motor of the drive mechanism 38 while the operation stage 37 moves from the stop position H1 to the stop position H2. To be more specific, the control unit 51 computes the actual moving amount Vr based on the pulse number supplied to the motor.

According to this configuration, by counting the rotational speed and the pulse number of the motor, the actual liquid delivery amount Vr of the liquid in the design liquid delivery time Ti can be computed easily.

Also, according to the present embodiment, the control unit 51 computes the actual liquid delivery time Tr required for delivering a liquid in an amount of the design liquid delivery amount Vi based on the actual liquid delivery amount Vr and the design liquid delivery amount Vi. Further, the control unit 51 compares the actual liquid delivery time Tr and the liquid delivery time threshold Tth, and determines maintenance options for the tube pump 32. According to this configuration, computation of the actual liquid delivery time Tr can be performed more easily compared to the prior art.

Also, according to the present embodiment, the control unit 51 compares the actual liquid delivery time Tr and the liquid delivery time threshold Tth, and determines maintenance options for the tube pump 32. According to this configuration, determination of maintenance options using the actual liquid delivery time Tr can be performed easily.

Also, according to the present embodiment, when the actual liquid delivery time Tr is smaller than the liquid delivery time threshold Tth, the control unit 51 determines that maintenance for the tube pump 32 is not required, and sets the actual liquid delivery time Tr to the time chart of the analysis operation.

In the past, when the deterioration state of the tube was to be determined, the liquid delivery amount was not controlled by extending the liquid delivery time but was controlled by accelerating the speed of the feeding operation of the pump. In this case, the rotational speed of the roller squashing the tube came to be increased, and the load to the tube was increased.

On the other hand, according to the present embodiment, the rotational speed of the roller is not changed, and the liquid delivery amount is controlled by extending the actual liquid delivery time Tr. According to this configuration, the time chart can be set to a proper state in accordance with the deterioration state of the tube pump 32, and the liquid delivery amount can be corrected to a design value without increasing the load to the tube.

When the actual liquid delivery time Tr is equal to or larger than the liquid delivery time threshold Tth, the control unit 51 determines that maintenance for the tube pump 32 is required, and notifies the outside of the fact that the replacement timing of the tube has come. Thereby, the user can recognize the replacement timing of the tube.

By executing the tube deterioration state determination flow described above every day or once a week before the analysis operation, the life of the tube pump can be checked easily. Also, by controlling the liquid delivery amount of the pump based on the deterioration state of the tube, the consumable component (tube) can be used without a loss until the life expires.

Further, although the automatic analyzer 100 was explained to be an apparatus for an immunological inspection, it may be other inspection apparatus such as an apparatus for a biochemical inspection, and may be a complex type apparatus combining an apparatus for a biochemical inspection, an apparatus for an immunological inspection, and the like. When a biochemical inspection is to be performed, a spectral photometer including a light source and a detector is provided and comes to be arranged at a predetermined position around the incubator 205 for example. The spectral photometer measures the light absorbance of the reaction liquid by dispersing and detecting transmitted light obtained by irradiating the light from the light source to the reaction liquid of the reaction container 2. Further, although FIG. 1 shows a dispensing mechanism of one system, in the case of the complex type apparatus described above, dispensing mechanisms of two systems or more may be provided such as a biochemical dispensing mechanism and an immunological dispensing mechanism for example.

Also, the present invention is not limited to the embodiments described above, and various modifications are included in the present invention, without departing from the scope of the appended claims. Further, it is possible to replace a part of a configuration of an embodiment by a configuration of another embodiment, and it is also possible to add a configuration of another embodiment to a configuration of an embodiment. Furthermore, with respect to a part of a configuration of each embodiment, it is possible to effect addition, deletion, and replacement of another configuration. Also, each member and the relative size described in the drawings are simplified and idealized for the purpose of easy understanding of the present invention, and there is a case of becoming more complicated shape in an implemented apparatus.

### List of Reference Signs

- 209:: analyzing unit
- 221:: first liquid bottle
- 222:: cleaning fluid bottle

- 223:: first liquid delivery pump
- 224:: cleaning fluid delivery pump
- 30:: liquid bottle
- 32:: tube pump
- 34:: sensor
- 36:: liquid delivery target container
- 37:: operation stage
- 38:: drive mechanism
- 40:: detection processing unit
- 50:: controller
- 100:: automatic analyzer
- H1, H2:: halt position
- Vi:: design liquid delivery amount
- Vr:: actual liquid delivery amount
- Ti:: design liquid delivery time
- Tr:: actual liquid delivery time
- Tth:: liquid delivery time threshold
- Di:: designed amount of movement
- Dr:: actual amount of movement

## Claims

1. An automatic analyzer (100) comprising:
a tube pump (32, 223, 224) configured to deliver a liquid from a liquid bottle (30, 221, 222) accommodating the liquid to a liquid delivery target container (36);
a mounting unit (37) configured to mount the liquid delivery target container (36);
a liquid surface detecting unit (34) configured to detect a liquid surface of the liquid in the liquid delivery target container (36); and
a control unit (51),
wherein:
the tube pump (32, 223, 224) is configured to deliver the liquid to the liquid delivery target container (36) during a design liquid delivery time (Ti) necessary to deliver the liquid in a design liquid delivery amount (Vi) before the tube pump (32, 223, 224) is degraded; and
the control unit (51) being configured to determine a degradation state of the tube pump (32, 223, 224) based on the design liquid delivery amount (Vi) and an actual liquid delivery amount,
**characterised in that**:
the automatic analyzer (100) comprises a drive mechanism (38) configured to drive the mounting unit (37) in a vertical direction;
the drive mechanism (38) is configured to move the mounting unit (37) mounting the liquid delivery target container (36) to which the liquid has been delivered from a first position (H1) to a second position (H2) at which the liquid surface is to be detected by the liquid surface detecting unit (34);
the control unit (51) is configured to compute the actual liquid delivery amount (Vr) of the liquid for the design liquid delivery time (Ti) based on the first position (H1) and the second position (H2); and
the control unit (51) is configured to compute an actual liquid delivery time (Tr) necessary to deliver the liquid in the design liquid delivery amount (Vi) based on the actual liquid delivery amount (Vr) and the design liquid delivery amount (Vi).

2. The automatic analyzer (100) according to claim 1, wherein the control unit (51) is configured to compute an actual amount of movement (Dr) of the mounting unit (37) based on the first position (H1) and the second position (H2), and the control unit (51) is configured to compute the actual liquid delivery amount (Vr) based on the actual amount of movement (Dr) and a designed amount of movement (Di) before the tube pump (32, 223, 224) is degraded.

3. The automatic analyzer (100) according to claim 2, wherein the control unit (51) is configured to compute the actual amount of movement (Dr) based on a number of revolutions of a motor of the drive mechanism (38) until the mounting unit (37) moves from the first position (H1) to the second position (H2).

4. The automatic analyzer (100) according to claim 3, wherein the control unit (51) is configured to compute the actual amount of movement (Dr) based on a pulse number (Pr) supplied to the motor until the mounting unit (37) moves from the first position (H1) to the second position (H2).

5. The automatic analyzer (100) according to claim 1, wherein the control unit (51) is configured to compare the actual liquid delivery time (Tr) with a liquid delivery time threshold (Tth) to determine a maintenance option to the tube pump (32, 223, 224).

6. The automatic analyzer (100) according to claim 5, wherein when the actual liquid delivery time (Tr) is smaller than the liquid delivery time threshold (Tth), the control unit (51) is configured to determine that maintenance to the tube pump (32, 223, 224) is unnecessary, and the control unit (51) is configured to set the actual liquid delivery time (Tr) on a time chart of analysis operation

7. The automatic analyzer (100) according to claim 6, wherein when the actual liquid delivery time (Tr) is the liquid delivery time threshold (Tth) or more, the control unit (51) is configured to determine that maintenance to the tube pump (32, 223, 224) is necessary, and the control unit (51) is configured to notify externally that replacement time of a tube of said pump comes.

## Patentansprüche

1. Automatischer Analysator (100), umfassend:
eine Schlauchpumpe (32, 223, 224), die dazu konfiguriert ist, eine Flüssigkeit aus einer Flüssigkeitsflasche (30, 221, 222), die die Flüssigkeit aufnimmt, zu einem Flüssigkeitsabgabe-Zielbehälter (36) abzugeben;
eine Installationseinheit (37), die dazu konfiguriert ist, den Flüssigkeitsabgabe-Zielbehälter (36) zu installieren;
eine Flüssigkeitsoberflächen-Erfassungseinheit (34), die zum Erfassen einer Flüssigkeitsoberfläche der Flüssigkeit in dem Flüssigkeitsabgabe-Zielbehälter (36) konfiguriert ist; und
eine Steuereinheit (51),
wobei
die Schlauchpumpe (32, 223, 224) dazu konfiguriert ist, die Flüssigkeit zu dem Flüssigkeitsabgabe-Zielbehälter (36) während einer Soll-Flüssigkeitsabgabezeit (Ti) abzugeben, die notwendig ist, um die Flüssigkeit in einer Soll-Flüssigkeitsabgabemenge (Vi) zu liefern, bevor die Schlauchpumpe (32, 223, 224) sich verschlechtert; und
die Steuereinheit (51) dazu konfiguriert ist, einen Verschlechterungszustand der Schlauchpumpe (32, 223, 224) auf Grundlage der Soll-Flüssigkeitsabgabemenge (Vi) und einer tatsächlichen Flüssigkeitsabgabemenge zu bestimmen,
**dadurch gekennzeichnet, dass**
der automatische Analysator (100) einen Antriebsmechanismus (38) umfasst, der dazu konfiguriert ist, die Installationseinheit (37) in einer vertikalen Richtung anzutreiben;
der Antriebsmechanismus (38) dazu konfiguriert ist, die Installationseinheit (37), die den Flüssigkeitsabgabe-Zielbehälter (36), an den die Flüssigkeit abgegeben wurde, installiert, von einer ersten Position (H1) zu einer zweiten Position (H2) zu bewegen, in der die Flüssigkeitsoberfläche durch die Flüssigkeitsoberflächen-Erfassungseinheit (34) zu erfassen ist;
die Steuereinheit (51) dazu konfiguriert ist, die tatsächliche Flüssigkeitsabgabemenge (Vr) der Flüssigkeit für die Soll-Flüssigkeitsabgabezeit (Ti) auf Grundlage der ersten Position (H1) und der zweiten Position (H2) zu berechnen, und
die Steuereinheit (51) dazu konfiguriert ist, auf Grundlage der tatsächlichen Flüssigkeitsabgabemenge (Vr) und der Soll-Flüssigkeitsabgabemenge (Vi) eine tatsächliche Flüssigkeitsabgabezeit (Tr) zu berechnen, die erforderlich ist, um die Flüssigkeit in der Soll-Flüssigkeitsabgabemenge (Vi) abzugeben.

2. Automatischer Analysator (100) nach Anspruch 1, wobei die Steuereinheit (51) dazu konfiguriert ist, einen tatsächlichen Bewegungsbetrag (Dr) der Installationseinheit (37) auf Grundlage der ersten Position (H1) und der zweiten Position (H2) zu berechnen, und die Steuereinheit (51) dazu konfiguriert ist, die tatsächliche Flüssigkeitsabgabemenge (Vr) auf Grundlage des tatsächlichen Bewegungsbetrags (Dr) und eines Soll-Bewegungsbetrags (Di) zu berechnen, bevor die Schlauchpumpe (32, 223, 224) sich verschlechtert.

3. Automatischer Analysator (100) nach Anspruch 2, wobei die Steuereinheit (51) dazu konfiguriert ist, den tatsächlichen Bewegungsbetrag (Dr) auf Grundlage auf einer Anzahl von Umdrehungen eines Motors des Antriebsmechanismus (38) zu berechnen, bis sich die Installationseinheit (37) von der ersten Position (H1) zu der zweiten Position (H2) bewegt.

4. Automatischer Analysator (100) nach Anspruch 3, wobei die Steuereinheit (51) dazu konfiguriert ist, den tatsächlichen Bewegungsbetrag (Dr) auf Grundlage einer dem Motor zugeführten Pulszahl (Pr) zu berechnen, bis sich die Installationseinheit (37) von der ersten Position (H1) zu der zweiten Position (H2) bewegt.

5. Automatischer Analysator (100) nach Anspruch 1, wobei die Steuereinheit (51) dazu konfiguriert ist, die tatsächliche Flüssigkeitsabgabezeit (Tr) mit einem Flüssigkeitsabgabezeit-Schwellenwert (Tth) zu vergleichen, um eine Wartungsoption für die Schlauchpumpe (32, 223, 224) zu bestimmen.

6. Automatischer Analysator (100) nach Anspruch 5, wobei, wenn die tatsächliche Flüssigkeitsabgabezeit (Tr) kleiner ist als der Flüssigkeitsabgabezeit-Schwellenwert (Tth), die Steuereinheit (51) dazu konfiguriert ist, zu bestimmen, dass eine Wartung der Schlauchpumpe (32, 223, 224) unnötig ist, und die Steuereinheit (51) dazu konfiguriert ist, die tatsächliche Flüssigkeitsabgabezeit (Tr) auf einem Zeitdiagramm des Analysebetriebs einzustellen.

7. Automatischer Analysator (100) nach Anspruch 6, wobei, wenn die tatsächliche Flüssigkeitsabgabezeit (Tr) dem Flüssigkeitsabgabezeit-Schwellenwert (Tth) oder mehr entspricht, die Steuereinheit (51) dazu konfiguriert ist, zu bestimmen, dass eine Wartung der Schlauchpumpe (32, 223, 224) erforderlich ist, und die Steuereinheit (51) dazu konfiguriert ist, extern zu benachrichtigen, dass die Zeit für den Austausch eines Schlauchs der Pumpe gekommen ist.

## Revendications

1. Analyseur automatique (100) comprenant :
une pompe à tube (32, 223, 224) configurée pour distribuer un liquide depuis une bouteille (30, 221, 222) de liquide recevant le liquide dans un récipient cible (36) de distribution de liquide ;
une unité (37) de montage configurée pour monter le récipient cible (36) de distribution de liquide ;
une unité (34) de détection de surface de liquide configurée pour détecter une surface de liquide du liquide dans le récipient cible (36) de distribution de liquide ; et
une unité (51) de commande,
dans lequel :
la pompe à tube (32, 223, 224) est configurée pour distribuer le liquide dans le récipient cible (36) de distribution de liquide lors d'une durée nominale (Ti) de distribution de liquide nécessaire pour distribuer le liquide en une quantité nominale (Vi) de distribution de liquide avant que la pompe à tube (32, 223, 224) ne soit dégradée ; et
l'unité (51) de commande étant configurée pour déterminer un état de dégradation de la pompe à tube (32, 223, 224) sur la base de la quantité nominale (Vi) de distribution de liquide et d'une quantité réelle de distribution de liquide,
**caractérisé en ce que** :
l'analyseur automatique (100) comprend un mécanisme (38) d'entraînement configuré pour entraîner l'unité (37) de montage dans un sens vertical ;
le mécanisme (38) d'entraînement est configuré pour déplacer l'unité (37) de montage montant le récipient cible (36) de distribution de liquide dans lequel le liquide a été distribué depuis une première position (H1) jusqu'à une deuxième position (H2) à laquelle la surface de liquide doit être détectée par l'unité (34) de détection de surface de liquide ;
l'unité (51) de commande est configurée pour calculer la quantité réelle (Vr) de distribution de liquide du liquide pour la durée nominale (Ti) de distribution de liquide sur la base de la première position (H1) et de la deuxième position (H2) ; et
l'unité (51) de commande est configurée pour calculer une durée réelle (Tr) de distribution de liquide nécessaire pour distribuer le liquide en la quantité nominale (Vi) de distribution de liquide sur la base de la quantité réelle (Vr) de distribution de liquide et de la quantité nominale (Vi) de distribution de liquide.

2. Analyseur automatique (100) selon la revendication 1, dans lequel l'unité (51) de commande est configurée pour calculer une quantité réelle de mouvement (Dr) de l'unité (37) de montage sur la base de la première position (H1) et de la deuxième position (H2), et l'unité (51) de commande est configurée pour calculer la quantité réelle (Vr) de distribution de liquide sur la base de la quantité réelle de mouvement (Dr) et d'une quantité nominale de mouvement (Di) avant que la pompe à tube (32, 223, 224) ne soit dégradée.

3. Analyseur automatique (100) selon la revendication 2, dans lequel l'unité (51) de commande est configurée pour calculer la quantité réelle de mouvement (Dr) sur la base d'un nombre de tours d'un moteur du mécanisme (38) d'entraînement jusqu'à ce que l'unité (37) de montage passe de la première position (H1) à la deuxième position (H2).

4. Analyseur automatique (100) selon la revendication 3, dans lequel l'unité (51) de commande est configurée pour calculer la quantité réelle de mouvement (Dr) sur la base d'un nombre d'impulsions (Pr) fournies au moteur jusqu'à ce que l'unité (37) de montage passe de la première position (H1) à la deuxième position (H2).

5. Analyseur automatique (100) selon la revendication 1, dans lequel l'unité (51) de commande est configurée pour comparer la durée réelle (Tr) de distribution de liquide avec un seuil (Tth) de durée de distribution de liquide pour déterminer une option de maintenance de la pompe à tube (32, 223, 224).

6. Analyseur automatique (100) selon la revendication 5, dans lequel, lorsque la durée réelle (Tr) de distribution de liquide est plus petite que le seuil (Tth) de durée de distribution de liquide, l'unité (51) de commande est configurée pour déterminer qu'une maintenance de la pompe à tube (32, 223, 224) est inutile, et l'unité (51) de commande est configurée pour paramétrer la durée réelle (Tr) de distribution de liquide sur un tableau chronologique d'opération d'analyse.

7. Analyseur automatique (100) selon la revendication 6, dans lequel, lorsque la durée réelle (Tr) de distribution de liquide est le seuil (Tth) de durée de distribution de liquide ou plus, l'unité (51) de commande est configurée pour déterminer qu'une maintenance de la pompe à tube (32, 223, 224) est nécessaire, et l'unité (51) de commande est configurée pour notifier de manière externe que le moment de remplacement d'un tube de ladite pompe approche.
